# EUROPÄISCHE PATENTSCHRIFT

(11) **EP 1 301 380 B1**
(45) Veröffentlichungstag und Bekanntmachung des Hinweises auf die Patenterteilung: **17.08.2005**
(21) Anmeldenummer: 01969440.5
(22) Anmeldetag: 19.07.2001
(51) Int. Cl.: B60S 1/04, B60S 1/08

(54) **WISCHANLAGE FÜR EINE SCHEIBE EINES KRAFTFAHRZEUGS**
WIPER SYSTEM FOR A GLASS PANE OF A MOTOR VEHICLE
SYSTEME D'ESSUYAGE DESTINE A UNE VITRE D'UNE AUTOMOBILE

(30) Priorität: 21.07.2000 DE 10035475
(43) Veröffentlichungstag der Anmeldung: 16.04.2003
(73) Patentinhaber: Valeo Wischersysteme GmbH, 74321 Bietigheim-Bissingen (DE)
(72) Erfinder: EGNER-WALTER, Bruno, 74076 Heilbronn (DE)
(74) Vertreter: Jahn, Wolf-Diethart
(86) Internationale Anmeldenummer: PCT/EP2001/008364
(87) Internationale Veröffentlichungsnummer: WO 2002/008032

(56) Entgegenhaltungen:
- DE-A- 19 833 404
- DE-U- 7 434 119
- GB-A- 2 325 851
- US-A- 5 251 861

## Beschreibung

Die vorliegende Erfindung betrifft eine Wischanlage für eine Scheibe eines Kraftfahrzeugs mit einer Befestigungsvorrichtung, welche voneinander beabstandete Befestigungsglieder und entsprechende Aufnahmeeinrichtungen umfasst, in die die Befestigungsglieder eingreifen können, und mit einer Kontakteinrichtung, welche mindestens ein, im Wesentlichen starr mit der Anlage verbundenes Teil und ein zu diesem komplementäres fahrzeugseitiges Teil umfasst und durch welche die Wischanlage mit einer fahrzeugseitigen Speiseeinrichtung verbunden werden kann.

Eine Wischanlage dieser Art ist aus der DE 198 33 404 A1 bekannt. Die dort offenbarte Scheibenwischanlage umfasst eine Tragkonstruktion, an der insgesamt drei als zylindrische Steckzapfen ausgebildete Befestigungsglieder vorgesehen sind. Die Steckzapfen werden in Aufnahmeöffnungen axial eingesteckt, die in speziellen fahrzeugseitigen Halteteilen angeordnet sind. An der Tragkonstruktion sind Wischlager vorgesehen, an denen Wischerarme befestigt werden können. In den Wischlagern aufgenommene Wischerwellen werden über ein Koppelgestänge von einem Antriebsmotor in eine zyklische Schwenkbewegung versetzt. Die elektrische Verbindung des Antriebsmotors zur fahrzeugseitigen Stromversorgung erfolgt über eine an das Motorgehäuse angeformte Buchse, in der entsprechende elektrische Kontakte vorhanden sind.

Bei der Montage der Wischanlage am Fahrzeug wird zunächst die Wischanlage am Fahrzeug durch Stecken, also ohne Verschrauben, befestigt und dann ein fahrzeugseitig vorgesehener Stecker, der über flexible Kabel mit der Stromversorgung verbunden ist, in die Buchse eingeführt.

Der Nachteil der bekannten Wischanlage ist jedoch, dass deren Montage trotz des vereinfachten Befestigungsvorganges der Anlage selbst noch relativ zeitaufwendig ist.

Die vorliegende Erfindung hat daher die Aufgabe, eine Wischanlage der eingangs genannten Art so weiterzubilden,
dass sie noch schneller und dennoch sicher am Fahrzeug befestigt werden kann.

Diese Aufgabe wird in Kombination mit den Merkmalen des Oberbegriffs des Anspruchs 1 dadurch gelöst, dass das fahrzeugseitige Teil der Kontakteinrichtung im Wesentlichen starr mit dem Fahrzeug verbunden ist und die beiden Teile der Kontakteinrichtung so ausgerichtet sind, dass der Kontakt beim Befestigen der Wischanlage am Fahrzeug automatisch hergestellt wird.

Das fahrzeugseitige Teil ist also erfindungsgemäß nicht mehr über ein flexibles Kabel so mit dem Fahrzeug verbunden, dass es frei beweglich ist, sondern stattdessen so starr mit dem Fahrzeug verbunden, dass es beim Befestigungsvorgang der Wischanlage am Fahrzeug mit dem anlagenseitigen Teil der Kontakteinrichtung ohne zusätzliche manuelle Tätigkeiten eines Benutzers zusammenarbeitet. Dabei sind die beiden Teile der Kontakteinrichtung so angeordnet und ausgerichtet, dass sie nach der erfolgten Befestigung der Wischanlage am Kraftfahrzeug einander derart benachbart sind, dass sich die Kontaktelemente der einzelnen Teile der Kontakteinrichtung
berühren und hierdurch der Kontakt automatisch hergestellt ist.

Auf diese Weise wird in einem einzigen Arbeitsschritt einerseits die Wischanlage mechanisch am Kraftfahrzeug befestigt, und andererseits werden Kontakte, welche zum Betrieb der Wischanlage erforderlich sind, im gleichen Arbeitsschritt hergestellt. Hierdurch wird die Montage der Wischanlage am Kraftfahrzeug beschleunigt, wodurch Kosten bei der Fertigung gespart werden können. Darüber hinaus werden Qualitätsmängel des Fahrzeugs durch ein bei der Montage der Wischanlage vergessenes Herstellen der entsprechenden Kontakte vermieden.

Vorteilhafte Weiterbildungen der Erfindung sind in Unteransprüchen angegeben.

Bei einer Ausgestaltung der Erfindung ist die Kontakteinrichtung in der Nähe jener Befestigungsstelle angeordnet, deren Befestigungsglied beim Befestigungsvorgang der Wischanlage als letztes in die Aufnahmeeinrichtung eingreift. Dies hat den Vorteil, dass Relativbewegungen der Kontaktteile der Kontakteinrichtung vermieden werden, welche auftreten, wenn nach der Herstellung der Kontakte noch Befestigungsglieder in entsprechende Aufnahmeeinrichtungen eingreifen müssten. Derartige Relativbewegungen der Kontakte könnten u.U. zu deren Beschädigung führen.

Besonders bevorzugt ist es, wenn die Bewegungsrichtung der Kontakte der Kontakteinrichtung beim Befestigungsvorgang der Wischanlage in etwa der Befestigungsrichtung entspricht. Bei dieser Weiterbildung der Erfindung werden komplizierte mechanische Vorrichtungen, welche die Befestigungsrichtung in entsprechende Bewegungen der Kontakte übertragen, vermieden.

Besonders vorteilhaft ist auch jene Weiterbildung, bei der die Kontakteinrichtung eine Ausrichteinrichtung und das anlagenseitige Teil der Kontakteinrichtung gegenüber der Wischanlage und/oder das fahrzeugseitige Teil der Kontakteinrichtung gegenüber dem Fahrzeug ein laterales Spiel zum Toleranzausgleich aufweist. Hierdurch wird der Tatsache Rechnung getragen, dass aufgrund von Fertigungstoleranzen das anlagenseitige Teil der

Kontakteinrichtung und das fahrzeugseitige Teil der Kontakteinrichtung möglicherweise zunächst nicht exakt aufeinander ausgerichtet sind. Durch die Ausrichteinrichtung und das Spiel erfolgt diese Ausrichtung automatisch während des Befestigungsvorgangs der Wischanlage am Fahrzeug.

Bei einer anderen Weiterbildung ist das anlagenseitige und/oder das fahrzeugseitige Teil der Kontakteinrichtung in Befestigungsrichtung elastisch gelagert. Hierdurch werden axiale Fertigungstoleranzen ausgeglichen, welche dazu führen könnten, dass nach erfolgter Befestigung zwischen den beiden Teilen der Kontakteinrichtung noch ein Spalt verbleibt oder diese mit zu großer Kraft aufeinander drücken.

Besonders einfach herzustellen ist jene Weiterbildung, bei der die Kontakteinrichtung einen Stecker und eine Buchse umfasst.

Dabei wird die Ausrichtung des Steckers gegenüber der Buchse auf einfache Weise ermöglicht, wenn dieser eine Zentrierschräge aufweist. In die gleiche Richtung geht eine
andere Weiterbildung der Erfindung, bei der die Buchse eine Zentrierschräge aufweist.

Die Herstellung der Kontakteinrichtung wird vereinfacht und eine gute Kapselung erreicht, indem der Stecker an die Antriebseinrichtung der Wischanlage angeformt ist.

Eine andere Weiterbildung der Erfindung zeichnet sich dadurch aus, dass der Stecker und/oder die Buchse eine Feuchtigkeitsabdichtung umfassen. Hierdurch wird die Betriebssicherheit der erfindungsgemäßen Wischanlage erhöht.

Schließlich wird erfindungsgemäß noch eine Weiterbildung vorgeschlagen, bei der durch die Kontakteinrichtung ein elektrischer Kontakt für die Antriebseinrichtung und gegebenenfalls für einen Sensor, insbesondere einen Füllstandssensor, und/oder ein Fluidkontakt hergestellt wird. Bei dieser erfindungsgemäßen Wischanlage können also durch die Kontakteinrichtung sämtliche für den Betrieb der Wischanlage erforderlichen Kontakte hergestellt werden, was weitere Arbeitsschritte und somit Montagekosten spart.

Nachfolgend wird ein Ausführungsbeispiel der Erfindung unter Bezugnahme auf die beiliegende Zeichnung im Detail erläutert. In der Zeichnung zeigen:
- Fig. 1:: eine perspektivische Darstellung einer Scheibenwischanlage mit einem anlagenseitigen Teil einer Kontakteinrichtung;
- Fig. 2:: eine teilweise geschnittene Seitenansicht der Scheibenwischanlage von Fig. 2 einschließlich eines fahrzeugseitigen Teils der Kontakteinrichtung; und

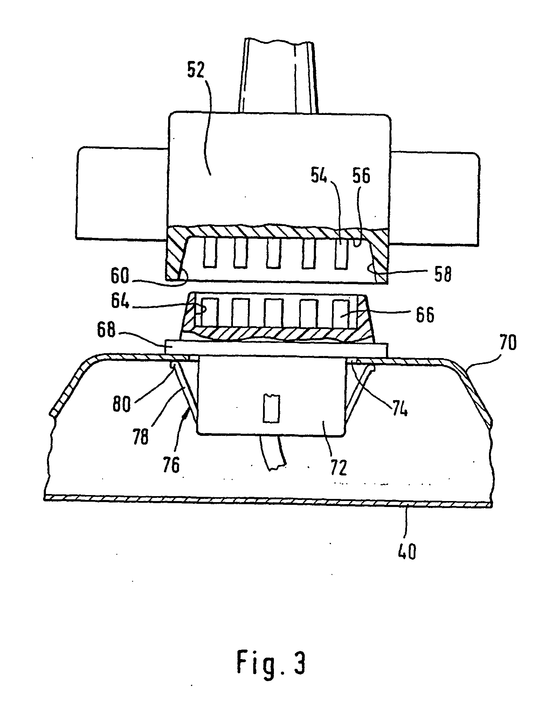

- Fig. 3:: eine teilweise geschnittene Ansicht in Richtung des Pfeiles X von Fig. 2.

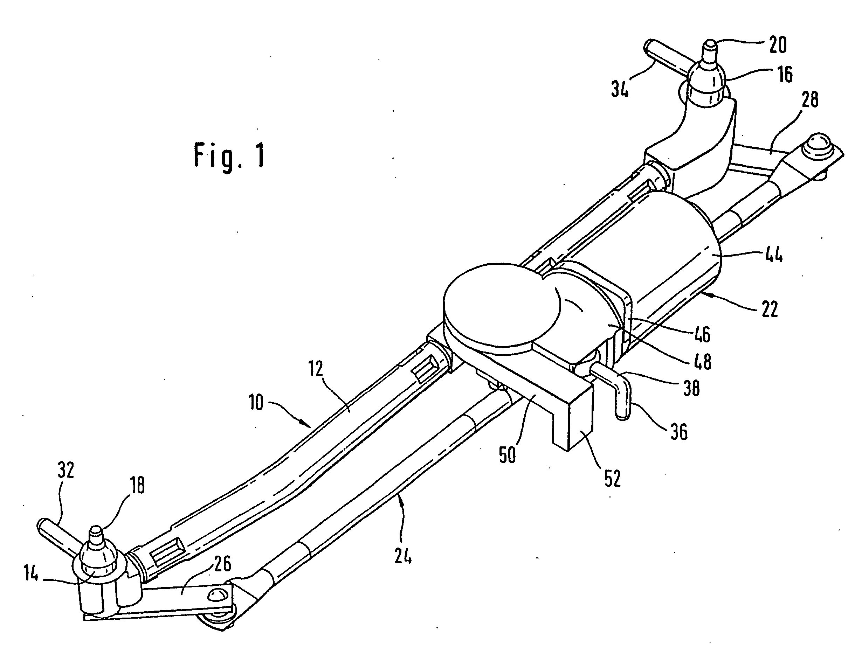

Eine Scheibenwischanlage für ein Kraftfahrzeug trägt in Fig. 1 insgesamt das Bezugszeichen 10. Sie umfasst einen stangenartigen Tragkörper 12, der an beiden Enden jeweils einen Lagerkörper 14 bzw. 16 trägt. In jedem Lagerkörper 14 bzw. 16 ist jeweils eine Wischerwelle 18 bzw. 20 zur Aufnahme eines Scheibenwischerarms axial gesichert und verdrehbar gelagert.

Auf dem Tragkörper 12 sitzt ungefähr auf dessen Mittelstück eine Antriebseinrichtung 22, welche auf ein Koppelgestänge 24 arbeitet. Das eine Ende des Koppelgestänges 24 ist mit einer Schwinge 26 gelenkig verbunden, welche wiederum mit der Wischerwelle 18 starr gekoppelt ist. Das andere Ende des Koppelgestänges 24 ist mit einer Schwinge 28 gelenkig verbunden, welche mit der anderen Wischerwelle 20 starr verbunden ist.

Die Scheibenwischanlage 10 ist mittels einer verschraubungsfreien Steckverbindung unterhalb einer in der Zeichnung nicht dargestellten Windschutzscheibe einer Fahrzeugkarosserie befestigbar. Zu diesem Zweck trägt jeder Lagerkörper 14, 16 einen zylindrischen Steckzapfen 32, 34. Der in Fig. 1 linke Steckzapfen 32 ragt in einem rechten Winkel einerseits zur Wischerwelle 18 und andererseits insgesamt zum Tragkörper 12 vom Lagerkörper 14 ab. Analoges gilt für den in Fig. 1 rechten Steckzapfen 34, welcher parallel zum Steckzapfen 32 ausgerichtet ist. Ein weiterer zylindrischer Steckzapfen trägt das Bezugszeichen 36 und ist an einem Distanzelement 38 auf der vom Tragkörper 12
abgewandten Seite der Antriebseinrichtung 22 starr befestigt.

Insgesamt liegen die Steckzapfen 32, 34 und 36 auf den Eckpunkten eines Dreiecks und bilden eine stabile Abstützbasis.

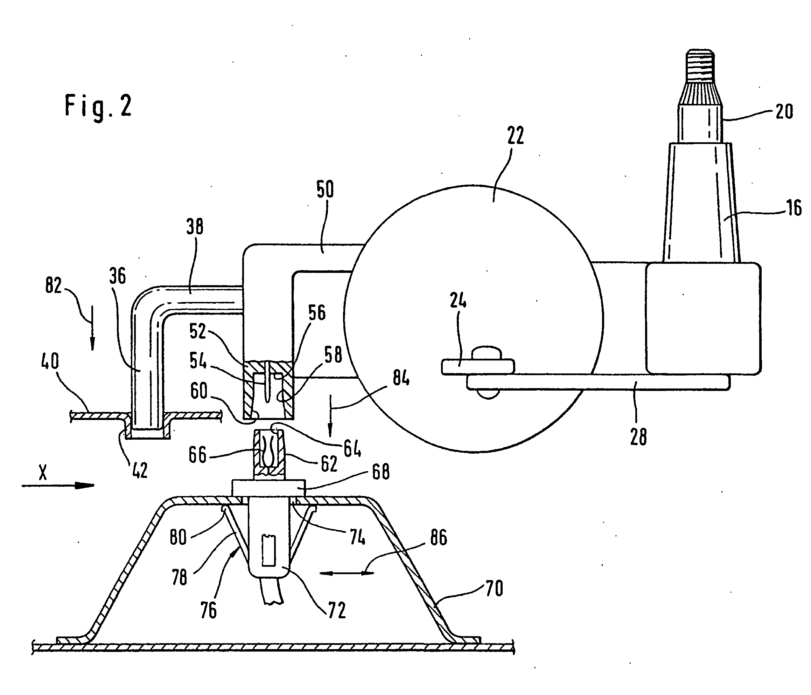

Zur Befestigung der Scheibenwischanlage 10 am Kraftfahrzeug sind fahrzeugseitig Aufnahmeeinrichtungen vorgesehen, von denen in Fig. 2 allerdings nur jene für den Steckzapfen 36 dargestellt ist. Dessen Aufnahmeeinrichtung besteht aus einem Blecheinzug in einem Strukturblech 40 des Kraftfahrzeugs, durch den ein Rohrabschnitt 42 zur Aufnahme des Steckzapfens 38 gebildet wird.

Die Antriebseinrichtung 22 umfasst im Wesentlichen einen Elektromotor 44, welcher über einen Befestigungsflansch 46 an ein Getriebe 48 angeflanscht ist. An das Gehäuse des Getriebes 48 ist ein Leiterkanal 50 angeformt, der sich im Wesentlichen in einem rechten Winkel zum Tragkörper 12 und parallel zum Distanzelement 38 auf die vom Tragkörper 12 abgewandte Seite der Antriebseinrichtung 22 erstreckt. Der Leiterkanal 50 endet lateral etwas vor dem Distanzelement 38. An dieses Ende ist ein Stecker 52 angeformt, der im Wesentlichen rechteckigen Querschnitt hat und sich in einem rechten Winkel vom Leiterkanal 50 parallel zum Steckzapfen 36 nach unten erstreckt.

In dem Leiterkanal 50 sind elektrische Leiter (nicht sichtbar) geführt, welche mit Steckkontakten 54 verbunden sind, die aus einer Basis 56 einer am unteren Ende des Steckers 52 vorhandenen Ausnehmung 58 herausragen. Auf diese Weise sind die Steckkontakte 54 nach außen hin, insbesondere auch während der Lagerung und während des Transports der Scheibenwischanlage 10, geschützt. Die lichte Weite der Ausnehmung 58 wird von der Basis 56 bis zum unteren Rand größer. Die Seitenwände der Ausnehmung 58 sind also als Einführschrägen 60 ausgebildet.

Das Getriebegehäuse 48, der Leiterkanal 50 und der Stecker 52 sind in einem Arbeitsschritt durch ein Spritzgießverfahren hergestellt. Als Material wird ein elektrisch isolierender Kunststoff verwendet. Die Steckkontakte 54 sind ebenso wie die nicht dargestellten Leiter in das Kunststoffmaterial eingegossen. Da der

Leiterkanal 50 über eine gewisse Strecke frei vom Getriebegehäuse 48 abragt und aus einem insgesamt elastischen Kunststoffmaterial hergestellt ist, bildet der Leiterkanal 50 in gewissem Umfang eine elastische Lagerung für den Stecker 52.

Das fahrzeugseitige Teil der Kontakteinrichtung umfasst eine Buchse 62, deren Außenkontur konisch und komplementär zur Ausnehmung 58 im Stecker 52 ist. Im oberen Bereich ist in der Buchse 62 eine Ausnehmung 64 vorhanden, in der den Steckkontakten 54 entsprechende Federkontakte 66 angeordnet sind. Die Federkontakte 66 wiederum sind über nicht dargestellte Leiter mit einer ebenfalls nicht dargestellten fahrzeugseitigen Speiseeinrichtung, z.B. einer Lichtmaschine oder einer Batterie, verbunden.

Die Buchse 62 weist einen von ihrem oberen Ende beabstandeten Kragen 68 auf. Der Abstand zwischen dem oberen Ende der Buchse 62 und dem Kragen 68 ist dabei etwas größer als die Tiefe der Ausnehmung 58 im Stecker 52. Mit dem Kragen 68 liegt die Buchse 62 auf der Oberseite eines bügelförmigen Halteteiles 70 auf. Mit einem

Anschlussabschnitt 72 erstreckt sich die Buchse 62 durch eine Ausnehmung 74 im Halteteil 70 hindurch nach unten, wobei der Durchmesser der Ausnehmung 74 etwas größer ist als der Durchmesser des Anschlussabschnitts 72. An das untere Ende der Buchse 62 sind Klemmbügel 76 angeformt, welche einen Federabschnitt 78 und einen Klemmabschnitt 80 aufweisen. Die Klemmbügel 76 erstrecken sich nach oben in Richtung auf den Kragen 68. Ihre Länge ist so bemessen, dass sie von der Unterseite her gegen das Halteteil 70 drücken. Auf diese Weise ist die Buchse 62 axial sicher gegen das Halteteil 70 verspannt, kann dabei jedoch aufgrund des zwischen dem Anschlussabschnitt 72 und der Ausnehmung 74 im Halteteil 70 vorhandenen Spiels radial bewegt werden. Das Halteteil 70 ist wiederum am Strukturblech 40 des Kraftfahrzeugs befestigt.

Die Montage der Wischanlage 10 am Kraftfahrzeug erfolgt folgendermaßen:
Zunächst werden die Steckzapfen 32, 34 und 36 in die entsprechenden Rohrabschnitte 42 eingeführt (entsprechend Pfeil 82 in Fig. 2). Hierdurch ist die Wischanlage 10 bereits exakt gegenüber dem Kraftfahrzeug positioniert. Während des weiteren Einführvorganges schiebt sich der Stecker 52 auf die Buchse 62, wie durch den Pfeil 84 in Fig. 2 angedeutet ist. Dabei arbeitet die Einführschräge 60 der Ausnehmung 58 im Stecker 52 mit der Außenkontur der Buchse 62 so zusammen, dass sich die Buchse 62 im Rahmen des lateralen Spiels gegenüber dem Halteteil 70 entsprechend den Pfeilen 86 axial fluchtend ausrichtet.

Dann greifen die Steckkontakte 54 im Stecker 52 in die Federkontakte 66 in der Buchse 62 ein, wodurch der elektrische Kontakt zwischen der Scheibenwischanlage 10 und der fahrzeugseitigen Speiseeinrichtung hergestellt wird. Aufgrund der Elastizität einerseits des Halteteils 70 und andererseits des Leiterkanals 50 können dabei auch axiale Fertigungstoleranzen ohne Weiteres ausgeglichen werden.

Auf diese Weise wird in einem einzigen Arbeitsschritt einerseits die Scheibenwischanlage 10 am Fahrzeug befestigt und andererseits der elektrische Kontakt zwischen der Antriebseinrichtung 22 und der fahrzeugseitigen Speiseeinrichtung hergestellt.

In einem nicht dargestellten Ausführungsbeispiel sind in den Stecker und die entsprechende Buchse auch Kontakte für einen Füllstandssensor eingeformt. Auch ein Fluidkontakt, durch den zwei Rohr- bzw. Schlauchleitungen miteinander verbunden werden, kann in der Kontakteinrichtung realisiert sein.

## Patentansprüche

1. Wischanlage (10) für eine Scheibe eines Kraftfahrzeugs mit einer Befestigungsvorrichtung, welche Befestigungsglieder (32, 34, 36) und entsprechende Aufnahmeeinrichtungen (42) umfasst, in die die Befestigungsglieder (32, 34, 36) eingreifen können, und mit einer Kontakteinrichtung, welche mindestens ein im Wesentlichen starr mit der Anlage verbundenes Teil (52) und ein zu diesem komplementäres fahrzeugseitiges Teil (62) umfasst und durch welche die Wischanlage (10) mit einer fahrzeugseitigen Speiseeinrichtung verbunden werden kann, **dadurch gekennzeichnet, dass** das fahrzeugseitige Teil (62) der Kontakteinrichtung im Wesentlichen starr mit dem Fahrzeug verbunden ist und die beiden Teile (52, 62) der Kontakteinrichtung so ausgerichtet sind, dass der Kontakt beim Befestigen der Wischanlage (10) am Fahrzeug automatisch hergestellt wird.

2. Wischanlage nach Anspruch 1, **dadurch gekennzeichnet, dass** die Kontakteinrichtung in der Nähe jener Befestigungsstelle angeordnet ist, deren Befestigungsglied (38) beim Befestigungsvorgang der Wischanlage (10) als letztes in die Aufnahmeeinrichtung (42) eingreift.

3. Wischanlage nach einem der Ansprüche 1 oder 2, **dadurch gekennzeichnet, dass** die Bewegungsrichtung (84) der Kontakte (54) der Kontakteinrichtung beim Befestigungsvorgang der Wischanlage (10) in etwa der Befestigungsrichtung (82) entspricht.

4. Wischanlage nach einem der vorhergehenden Ansprüche, **dadurch gekennzeichnet, dass** die Kontakteinrichtung eine Ausrichteinrichtung (60) und das anlagenseitige Teil (52) der Kontakteinrichtung gegenüber der Wischanlage (10) und/oder das fahrzeugseitige Teil (62) der Kontakteinrichtung gegenüber dem Fahrzeug ein laterales Spiel (86) zum Toleranzausgleich aufweist.

5. Wischanlage nach einem der vorhergehenden Ansprüche, **dadurch gekennzeichnet, dass** das anlagenseitige (52) und/oder das fahrzeugseitige (62) Teil der Kontakteinrichtung in Befestigungsrichtung elastisch gelagert ist.

6. Wischanlage nach einem der vorhergehenden Ansprüche, **dadurch gekennzeichnet, dass** die Kontakteinrichtung einen Stecker (52) und eine Buchse (62) umfasst.

7. Wischanlage nach Anspruch 6, **dadurch gekennzeichnet, dass** der Stecker (52) eine Zentrierschräge (60) aufweist.

8. Wischanlage nach einem der Ansprüche 6 oder 7, **dadurch gekennzeichnet, dass** die Buchse (62) eine Zentrierschräge aufweist.

9. Wischanlage nach einem der Ansprüche 6 bis 8, **dadurch gekennzeichnet, dass** der Stecker (52) an die Antriebseinrichtung (22) der Wischanlage (10) angeformt ist.

10. Wischanlage nach einem der Ansprüche 6 bis 9, **dadurch gekennzeichnet, dass** der Stecker und/oder die Buchse eine Feuchtigkeitsabdichtung umfassen.

11. Wischanlage nach einem der vorhergehenden Ansprüche, **dadurch gekennzeichnet, dass** durch die Kontakteinrichtung ein elektrischer Kontakt für die Antriebseinrichtung (22) und gegebenenfalls für einen Sensor, insbesondere einen Füllstandssensor, und/oder ein Fluidkontakt hergestellt wird.

## Claims

1. A wiper system (10) for a windscreen of a motor vehicle, with a fastening device, which comprises fastening components (32, 34, 36) and corresponding receiving facilities (42) in which the fastening components (32, 34, 36) can engage, and with a contact facility, which comprises at least a component (52), essentially rigidly connected to the system, and a complementary vehicle-based component (62), and by means of which the wiper system (10) may be connected to a vehicle-based supply facility, **characterized in that** the vehicle-based part (62) of the contact facility is essentially rigidly connected to the vehicle, and the two parts (52, 62) of the contact facility are aligned in such a way that contact is made automatically when the wiper system (10) is secured to the vehicle.

2. A wiper system as claimed in claim 1, **characterized in that** the contact facility is disposed in the vicinity of the fixing point whose fastening component (38) is the last to engage in the receiving facility (42) when the wiper system (10) is secured.

3. A wiper system as claimed in either one of claims 1 or 2, **characterized in that** the direction of movement (84) of the contacts (54) of the contact facility during the fastening process of the wiper system (10) roughly corresponds to the fastening direction (82).

4. A wiper system as claimed in any one of the preceding claims, **characterized in that** the contact facility is equipped with an alignment facility (60), and the system-based part (52) of the contact facility relative to the wiper system (10) and/or the vehicle-based part (62) of the contact facility relative to the vehicle has lateral clearance (86) for tolerance equalization.

5. A wiper system as claimed in any one of the preceding claims, **characterized in that** the system-based (52) and/or the vehicle-based (62) part of the contact facility is flexibly bearing-mounted in the fastening direction.

6. A wiper system as claimed in any one of the preceding claims, **characterized in that** the contact facility comprises a plug (52) and a socket (62).

7. A wiper system as claimed in claim 6, **characterized in that** the plug (52) is equipped with a centering bevel.

8. A wiper system as claimed in either one of claims 6 or 7, **characterized in that** the socket (62) is equipped with a centering bevel.

9. A wiper system as claimed in any one of claims 6 to 8, **characterized in that** the plug (52) is integrally formed on the drive facility (22) of the wiper system (10).

10. A wiper system as claimed in any one of claims 6 to 9, **characterized in that** the plug and/or the socket includes a moisture seal.

11. A wiper system as claimed in any one of the preceding claims, **characterized in that**, by means of the contact facility, an electrical contact for the drive facility (22) and, if applicable, for a sensor, in particular a fill-level sensor, is made, and/or a fluid contact is made.

## Revendications

1. Système d'essuyage (10) pour pare-brise de véhicule avec un dispositif de fixation, qui comprend des éléments de fixation (32, 34, 36) et des dispositifs de réception (42) correspondants dans lesquels peuvent s'engager les éléments de fixation (32, 34, 36), et d'un dispositif de contact qui comprend au moins une partie (52) reliée sensiblement rigidement au système et une partie complémentaire (62) du côté du véhicule, permettant de relier le système d'essuyage (10) à un dispositif d'alimentation du côté du véhicule, **caractérisé en ce que** la partie (62) du dispositif de contact du côté du véhicule est reliée sensiblement rigidement au véhicule, et les deux parties (52, 62) du dispositif de contact sont alignées de façon à établir automatiquement le contact lors de la fixation du système d'essuyage (10) au véhicule.

2. Système d'essuyage selon la revendication 1, **caractérisé en ce que** le dispositif de contact est placé à proximité de tout emplacement de fixation dont l'élément de fixation (38) s'engage en dernier dans le dispositif de réception (42) lors du processus de fixation du système d'essuyage (10).

3. Système d'essuyage selon l'une des revendications 1 ou 2, **caractérisé en ce que** la direction de déplacement (84) des contacts (54) du dispositif de contact correspond quasiment à la direction de fixation (82) lors du processus de fixation du système d'essuyage (10).

4. Système d'essuyage selon l'une des revendications précédentes, **caractérisé en ce que** le dispositif de contact comporte un dispositif d'alignement (60) et, pour compenser les tolérances, la partie (52) du dispositif de contact du côté du système présente un jeu latéral (86) par rapport au système d'essuyage (10) et/ou la partie (62) du dispositif de contact du côté du véhicule présente un jeu latéral (86) par rapport au véhicule.

5. Système d'essuyage selon l'une des revendications précédentes, **caractérisé en ce que** la partie (52) du dispositif de contact du côté du système et/ou la partie (62) du dispositif de contact du côté du véhicule sont montées élastiquement dans une direction de fixation.

6. Système d'essuyage selon l'une des revendications précédentes, **caractérisé en ce que** le dispositif de contact comporte une fiche (52) et une douille (62).

7. Système d'essuyage selon la revendication 6, **caractérisé en ce que** la fiche (52) comporte un chanfrein de centrage (60).

8. Système d'essuyage selon l'une des revendications 6 ou 7, **caractérisé en ce que** la douille (62) comporte un chanfrein de centrage.

9. Système d'essuyage selon l'une des revendications 6 à 8, **caractérisé en ce que** la fiche (52) est disposée sur le dispositif d'entraînement (22) du système d'essuyage (10).

10. Système d'essuyage selon l'une des revendications 6 à 9, **caractérisé en ce que** la fiche et/ou la douille comportent une garniture d'étanchéité contre l'humidité.

11. Système d'essuyage selon l'une des revendications précédentes, **caractérisé en ce qu'**un contact électrique destiné au dispositif d'entraînement (22) et éventuellement destiné à un capteur, en particulier un capteur de remplissage, et/ou un contact de fluide sont réalisés par le dispositif de contact.
